Europäisches Patentamt

(19) European Patent Office

Office européen des brevets

(11) Publication number: **0 338 866**
A2

# (12) EUROPEAN PATENT APPLICATION

(21) Application number: **89304038.6**

(22) Date of filing: **24.04.89**

(51) Int. Cl.⁴: **H 04 N 5/91**

(30) Priority: **22.04.88 GB 8809514**

(43) Date of publication of application:
**25.10.89 Bulletin 89/43**

(84) Designated Contracting States:
**AT BE CH DE ES FR GR IT LI LU NL SE**

(71) Applicant: **BRITISH BROADCASTING CORPORATION**
**Broadcasting House**
**London W1A 1AA (GB)**

(72) Inventor: **Robinson, Adrian Paul**
**25, Munden Street**
**London W14 0RH (GB)**

(74) Representative: **Pears, David Ashley et al**
**REDDIE & GROSE 16 Theobalds Road**
**London WC1X 8PL (GB)**

The title of the invention has been amended (Guidelines for Examination in the EPO, A-III, 7.3).

(54) Method for downloading a scrambled television signal and receiver therefor.

(57) A scrambled television signal is downloaded for recording on a video cassette recorder (VCR) (10) by receiving a scrambled signal via an antenna (2) and a tuner (4). A descrambler (6) determines whether or not the signal contains a predetermined data code and if the data code is present enables operation of the descrambler (6) as well as generating an "access granted logic signal" to enable operation of a microprocessor/logic control circuit (8). The microprocessor/logic control circuit generates control signals for the VCR (10) and these may be via an infra-red control unit (18). The control signals cause the VCR (10) to record the descrambled output of the descrambler (6).

FIG.4

**Description**

## REMOTE CONTROL SYSTEM FOR DOWNLOADING

This invention relates to the downloading of a broadcast scrambled television signal for recording in unscrambled form on a video cassette recorder (VCR), and in particular to a system for remotely controlling the downloading operation.

Television programmes are transmitted in scrambled form so that they are available only to authorised viewers e.g. viewers who have paid for particular programme. The transmission preferably takes place at night and the programme is recorded when the transmitters are not being used for normal broadcasts.

In its simplest form, downloading requires the viewer to programme his VCR to switch on and record a programme at the appropriate time. For this reason it is necessary for the broadcaster to announce, in advance, the time at which the broadcast will take place.

To release the viewer from the need to programme his VCR, and the broadcaster from the need to announce the time and channel of transmission of a particular programme, control data can be transmitted with the television signal. The viewer has a data decoder responsive to the transmited control data and a remote control unit for the VCR, activated by the data decoder. Conveniently this equipment may be included in a descrambler box.

Using such an arrangement, the broadcaster can send data signals to control the operation of the VCR functions e.g. record, rewind, stop, etc. and may thus cause a predetermined programme to be recorded. The data signal may also cause the VCR to receive signals from any channel and can also be addressed so as to only activate the VCR's of particular groups of viewers. This is necessary if a tiering facility in the scrambling system is used to make programmes available only to particular groups of viewers who have been authorised to receive them. The scrambling system in any tiering facility will operate by virtue of codes particular to such a system.

In operation the control data will comprise specific commands to select a channel, record, stop, rewind etc. sent at appropriate times in relation to the beginning and end of the programme. The broadcaster must ensure that the addressing of the control data matches the tiering of the scrambling system.

In accordance with one aspect of the present invention there is provided a method for downloading a scrambled television signal comprising the steps of, receiving the scrambled television signal, determining whether the received signal includes a predetermined data code, descrambling the signal when the code is detected and generating control signals for a video cassette recorder (VCR) to record the descrambled signal when the predetermined code is detected. Thus the two required functions both operate in response to the same code making the system simpler.

The method may include the step of selectively tuning into each available television channel in turn, determining whether the selected channel contains the predetermined data code and remaining tuned to that channel when the predetermined data code is detected.

Preferably the reception of the predetermined data code takes place before the reception of a programme to be recorded on the VCR.

·The method may also include the step of generating a delay before generating a stop signal for the VCR, the delay and stop signal being generated in response to a signal not including the predetermined data code.

Preferably no stop signal is generated if the received signal includes the predetermined data code before the end of the delay.

According to another aspect of the present invention there is provided a receiver for downloading a television signal comprising, means for receiving a scrambled television signal, means for determining whether the received signal includes a predetermined data code, means for descrambling the received signal, and means for effecting the recording of the descrambled signal when the pretermined data code is detected in the signal.

The receiver may also include means for selectively tuning to each available channel to determine whether or not the selected channel incudes the predetermined data code. Preferably this selective tuning takes place repeatedly when the data code is not present in the received signal.

The receiver may also include means for generating a delay before generating control signals for the VCR, the delay being generated when reception of the predetermined data code ceases.

According to another aspect of the invention there is provided a transmitter for transmitting a scrambled television signal comprising input means to receive a television signal, means for scrambling the television signal, means for repeatedly inserting a predetermined data code into the scrambled signal, and means for transmitting the signal.

The means for inserting the data code may be included in the scrambling means.

The invention is now described in more detail by way of example with referecne to the Figures in which:

Figure 1 shows a receiver embodying the invention;

Figure 2 shows the structure of a descrambler for use in the invention;

Figure 3 shows an embodiment of a control system for a VCR for use in the invention; and,

Figure 4 is a block diagram of another receiver embodying the invention.

In this particular embodiment of the invention, the scrambling system at the transmitter includes a data channel, one purpose of which is to control access to a programme. Thus only authorised viewers will be able to descramble and download particular programmes. The remote control operations are initiated by the onset of scrambling and the granting of access to the transmitted programme by the descrambler. The remote control commands for the VCR are generated in the appropriate sequence by a microprocessor or a logic circuit.

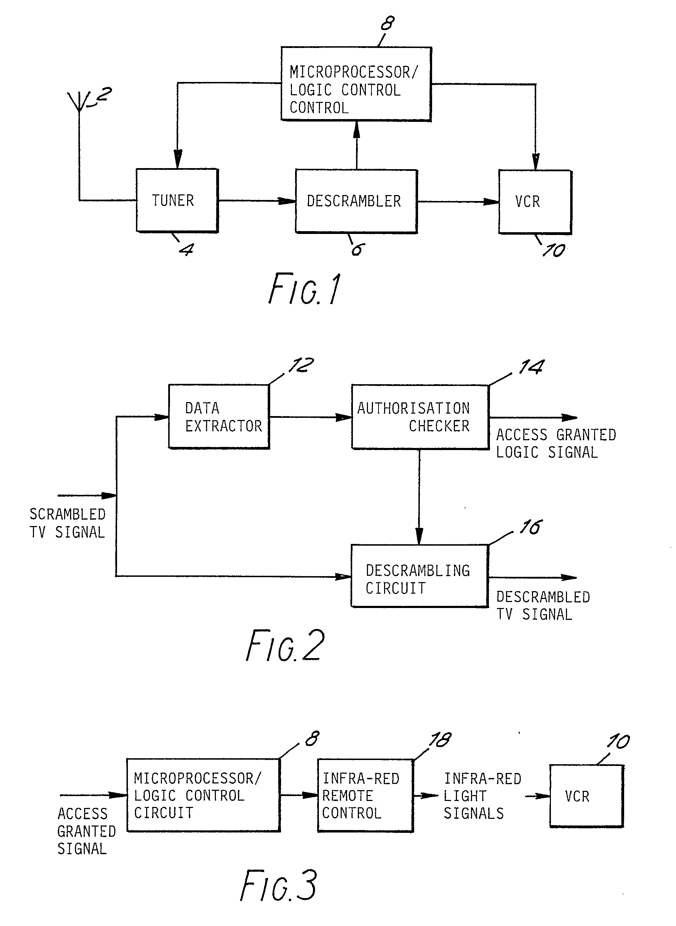

In the embodiment shown in Figure 1 a signal is received at a tuner 4 from an antenna 2 and is provided as the input to a descrambler 6. The tuner is tuned to one of the available television channels by a microprocessor logic control circuit 8. An output of the descrambler 6 is an input to the microprocessor 8 and provides a logic signal to the microprocessor in accordance with whether or not the descrambler has received a predetermined data code and granted access to the received signal. The key which enables the descrambler to do this is held in firmware in the descrambler in such a way as to be secure against discovery. Thus only subscribers whose descramblers have been fitted with the right firmware have access to the scrambled transmission. If the predetermined data code is not detected by the descrambler then the logic signal will cause the microprocessor 8 to send signals to the tuner 4 to select the next available TV channel. The same test is then carried out on this TV channel.

If the predetermined data code is detected by the descrambler then the logic signal will cause the microprocessor 8 to send signals to a VCR 10 to control the recording of a descrambled television programme.

In operation, the transmission may go into scrambled mode a few minutes before the start of the programme. The scrambled signal includes a data code to give the appropriate group of viewers access to the programme. The microprocessor 8 repeatedly controls the tuner 4 to receive each channel in turn until the logic signal from the descrambler is generated in response to the data code, indicating that access has been granted to the transmission on that channel. When access is granted to a channel, no further tuning takes place. If necessary to rewind command is sent to the VCR 10 and a few minutes later a record command is generated either before, or to coincide with the start of, the programme.

After the end of the programme, the transmission reverts to either the clear mode or to a different scrambling sequence and data code. The descrambler 6 therefore no longer grants access to the transmission and after a short delay a stop command for the VCR is generated by the microprocessor 8 in response to the access logic signal from the descrambler. This short delay ensures that if there is a short break in transmission or a momentary loss of synchronisation of the descrambler recording will continue. After the end of the programme, the microprocessor 8 resumes controlling the tuner 4 to receive each channel in turn to find a signal to which access is granted.

The descrambler shown in figure 2 receives an input scrambled television signal from the tuner 4 of figure 1. This signal goes to a data extractor 12 which extracts a data code transmitted with the scrambled television signal. The output of the data extractor 12 is coupled to an input of an authorisation checker 14 which determines whether or not the descrambler is authorised to descramble the received signal. If the descrambler is authorised then it sends a logic signal to a descrambling circuit 16 instructing the circuit to descramble the signal and to make it available at an output. A second output of the authorisation checker 14 is an 'access granted' logic signal which is used as the input to the microprocessor/logic circuit of figure 1.

The embodiment of the VCR control system shown in figure 3 includes the microprocessor/logic control circuit 8 which receives the access granted logic signal from authorisation checker 14. The microprocessor 8 has an output connected to an infra-red remote control unit 18 which sends infra-red light signals to control the operation of the VCR 10. The microprocessor sends signals to simulate a sequence of key presses on the remote control unit 18 so as to cause the correct sequence of infra-red control signals to be sent to the VCR 10.

In a preferred embodiment the infra-red control unit 18 is intelligent and can be programmed to provide the infra-red light signals required by any desired VCR.

A cable may alternatively be used to connect the remote control unit 18 to a modified VCR 10.

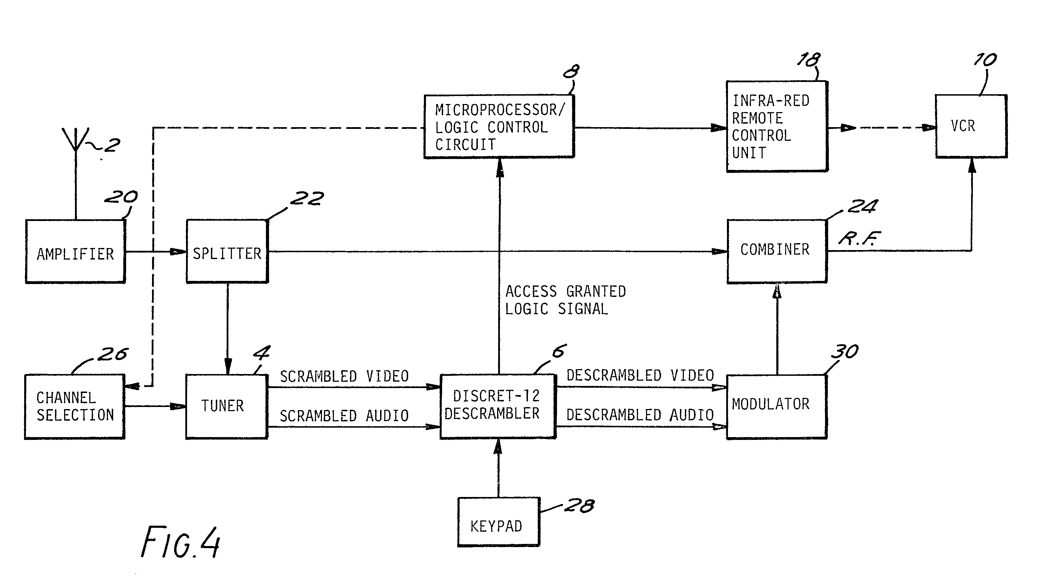

The downloading receiver circuit shown in figure 4 comprises an antenna receiving television signals and connected to an amplifier 20. The amplifier output is connected to a splitter circuit 22 with outputs connected to a tuner 4 and a combiner 24. The television signals delivered by the antenna 2 pass through the splitter 22 to the combiner 24 which has an RF output connected to the input 24 of a VCR 10.

Scrambled and unscrambled television signals pass through the splitter 22 to a tuner 4 which demodulates the recieved signal and which is under the control of a channel selection circuit 26. This may enable channels to be selected manually or may be under the control of signals received from the microprocessor/logic control circuit 8, as shown by the broken line connection.

The tuner 4 has video and audio outputs connected to the video and audio inputs of a descrambling circuit 6. In this example the descrambling circuit 6 is a commercially available "Discret-12" descrambler. This provides 14 tiers of descrambling and authorisation is enabled by entering a ten-digit number in a keypad 28 coupled to the descrambler 6. The number entered from the keypad includes coded information as to which tiers are authorised. The number is combined with a unique descrambler identity code stored in firmware and with some of the transmitted data to reconstruct the scrambling sequence so that the signal can be descrambled. In addition the number must have the correct relationship with a (Secret) 'Master' number stored in the scrambler. So far as the present invention is concerned, the significant point is that descrambling only takes place if there is a correct relationship between the keyed-in number and master number on the one hand and on the other hand the data code which is received from the tuner 4, being included in the scrambled video signal.

The descrambler 6 has an access granted logic signal output connected to an input to the microprocessor/logic circuit 8. This has an output connected to the infra-red remote control unit 18. Operation of this portion of the circuit has been described above with reference to figures 2 and 3.

A further two outputs of the descrambler 6 take descrambled video and descrambled audio signals to a modulator 30 which remodulates the signals.

The modulator has an output connected to a further input of the combiner 24 which makes the modulated signal available to the VCR 10. Descrambled signals are modulated to a free RF channel to which one of the selectable channels on the VCR 10 is tuned.

Thus it will be appreciated that both scrambled and clear television signals pass through the circuit of figure 4 via different routes and are available at the RF input of the VCR 10. Descrambled signals are modulated to a free RF. channel to which one of the selective channels on the VCR 10 is tuned.

The microprocessor 8 used may be programmable by the manufacturer or the user to perform other functions.

With the invention described above, channel selection and remote control are effected without data being specifically transmitted for those purposes. Also, the success of the downloading depends on the successful reception of only the scrambled channel rather than the combination of the scrambled channel and the remote control data channel.

## Claims

1. A method for downloading a scrambled television signal comprising the steps of, receiving the scrambled television signal, determining whether the received signal includes a predetermined data code, descrambling the signal when the data code is detected, and characterised by generating control signals for a video recorder to record the descrambled signal when the data code is detected.

2. A method according to claim 1 characterised by the steps of selectively tuning into each available television channel, determining whether the selected channel contains the predetermined data code and remaining tuned to that channel when the data code is detected.

3. A method according to claim 1 or 2 characterised in that reception of the predetermined data code occurs prior to the reception of a programme to be recorded by the video recorder.

4. A method according to claim 1, 2 or 3 characterised by the step of generating a delay before generating a stop signal for the video recorder, the delay and stop signal being generated in response to a signal not including the predetermined data code.

5. A method according to claim 4 characterised in that no stop signal is generated if the predetermined data code is detected before the end of the delay.

6. A method according to any preceding claim characterised in that the step of generating control signals for a video recorder includes the step of generating a logic signal to enable operation of a means for generating control signals for the video recorder.

7. A method according to claim 6 characterised by the step of simulating a keying sequence for a remote control unit for the video recorder.

8. A receiver for downloading a scrambled television signal comprising, means (2,4) for receiving a television signal, mean (12,14) for determining whether the received signal includes a predetermined data code, means (16) for descrambling the received signal, means (10) for recording the descrambled signal, and characterised by means (8) responsive to detection of the pretermined data code for generating control signals for the recording means.

9. A receiver according to claim 8 characterised by means (2,6) for selectively tuning to each available television channel when no data code is detected in the received signal.

10. A receiver according to claim 8 or 9 characterised by means for generating a delay prior to generating a stop signal for the recording means (10), the delay being generated in response to a signal not including the predetermined data code.

11. A receiver according to any of claims 8 to 10 characterised in that the means (12,14) for determining whether the received signal includes a predetermined data code includes a means (14) for generating a logic signal to enable operation of the means (8) for generating control signals for the recording means (10) and for generating a logic signal to enable operation of the descrambling means (16).

12. A receiver according to any of claims 8 to 11 characterised in that the means (8) for generating control signals comprises a remote control unit (18) for the recording means, and means for generating signals simulating a keying sequence for the remote control unit.

13. A receiver according to claim 12 characterised in that the remote control unit transmits infra-red control signals to the recording means.

FIG.1

FIG.2

FIG.3

FIG.4

EP 0 338 866 A2